# EUROPÄISCHE PATENTANMELDUNG

(11) **EP 1 371 512 A2**
(43) Veröffentlichungstag der Anmeldung: **17.12.2003**
(21) Anmeldenummer: 03013630.3
(22) Anmeldetag: 16.06.2003
(51) Int. Cl.: B60K 15/04

(54) **Stutzenabschluss für den Einfüllstutzen eines Flüssigkeitsbehälters**

(30) Priorität: 14.06.2002 DE 20209335 U
(71) Anmelder: Gerdes GmbH, 50170 Kerpen (DE); ADAM OPEL AG, 65423 Rüsselsheim (DE)
(72) Erfinder: Gerdes, Theodor, 40764 Langenfeld (DE); Rongstock, Dieter, 64546 Mörfelden-Walldorf (DE)
(74) Vertreter: Bungartz, Klaus Dipl.-Ing.

(57) **Zusammenfassung**

Die Erfindung betrifft einen Stutzenabschluss für den Einfüllstutzen eines Flüssigkeitsbehälters mit einem, eine Rückstromsperre aufweisenden Gasauslass für während des Befüllens verdrängte Gasmengen, wobei ein unteres Verschlussmittel den unteren Bereich verschließt, dass durch Einschieben einer Eingießtülle geöffnet werden kann. Nachteilig bei den bekannten Stutzenabschlüssen ist, dass Flüssigkeit oder Gase unbeabsichtigt, insbesondere durch Schäumen beim Einfüllen austreten können.

Dies vermeidet die Erfindung dadurch, dass der Gasauslass über einen Gasverschluss (4) verschließbar ist, der durch die Öffnungsbewegung des inneren Verschlussmittels (3) zu öffnen ist, und dass der Gasauslass einen von dem Einlaufbereich (2) getrennten Abluftkanal (7) umfasst, der aus dem Stutzenabschluss herausgeführt und mit dem Flüssigkeitsbehälter verbunden ist und eine Labyrinthdichtung aufweist.

## Beschreibung

Die Erfindung betrifft einen Stutzenabschluss für den Einfüllstutzen eines Flüssigkeitsbehälters mit einem oberen Stutzenrand, einem in den oberen Stutzenrand eingesetzten, eine Eingießtülle insbesondere einer Zapfpistole aufnehmenden Einlaufbereich und mit einem Gasauslass für während des Befüllens verdrängte Gasmengen. Solche Stutzenabschlüsse werden zum Beispiel für den Stutzen des Kraftstoffbehälters eines Kraftfahrzeuges eingesetzt.

Der Gasauslass kann bei einer möglichen Ausgestaltung der Erfindung bei geschlossenem Stutzen durch einen aufgesetzten Deckel über eine Rückströmsperre verschlossen werden, so dass im geschlossenen Zustand keine Flüssigkeit in den Gasauslass eintreten kann.

Stutzenabschlüsse dieser Art sind allgemein bekannt. Neben der Aufnahme der Eingießtülle und einer eventuell gewünschten Durchmesserreduktion zur Vermeidung von Fehlbetankungen ist eine wesentliche Aufgabe des Stutzenabschlusses, dass das Austreten von Gasen aus dem Tank während des Betriebes vermieden wird, während beim Betanken des Fahrzeugs das durch den eintretenden Kraftstoff verdrängte Gas entweichen können muss.

Die bekannten Stutzenabschlüsse weisen einen neben dem Einlaufbereich verlaufenden Kanal auf, der ohne gesonderten Verschluss während des Tankens verdränge Gasvolumen auslässt. Dieser Gasauslass soll nur während der Befüllung erfolgen, wogegen während des Betriebes kein Druckausgleich erfolgen muss. Hierdurch wird vermieden, dass beispielsweise Benzingase in die Umwelt entweichen. Insbesondere im Falle eines Unfalles könnte ferner brennbares Benzin-/Luftgemisch austreten. Diese Gefahr kann durch einen Fahrzeugbrand noch steigen, da infolge der Hitzeeinwirkung der Innendruck des Behälters ansteigt. Es ist offensichtlich, dass in solchen Fällen ein Austreten von Gas oder Flüssigkeit unerwünscht ist.

Durch eine Entnahme der Flüssigkeit bei verschlossenem Stutzen, bei einem Kraftstofftank zum Beispiel durch den Verbrauch des Motors würde ohne gesonderten Druckausgleich ein Unterdruck entstehen, der beispielsweise ein Kollabieren des Tankes verursachen könnte. Dieser Druckausgleich wird üblicherweise über den Deckel zum Verschließen des Einfüllstutzens, also zum Beispiel den Tankdeckel vorgenommen, so dass während des Betriebes der Gasauslass vollständig verschlossen bleiben kann.

Der Nachteil der bekannten Stutzenabschlüsse liegt darin, dass sich beim Befüllen des Behälters eine Fließfront in flüssiger Form oder in Form von Schaum aufbauen kann, die bei Erreichen der maximalen Befüllung oder auch schon deutlich vorher gegen den Stutzenabschluss drücken kann. So kann beispielsweise Kraftstoff vor oder nach dem selbsttätigen Abschalten einer Zapfpistole und auch während des Nachtankens über den Gasauslass aus dem Stutzen austreten, was natürlich aus vielerlei Gründen nicht erwünscht ist.

Aufgabe der Erfindung ist es daher, einen Stutzenabschluss zu schaffen, der bei sicherem Gasaustausch ein Herausspritzen des eingefüllten Mediums bestmöglich verhindert.

Diese Aufgabe wird nach der Erfindung dadurch gelöst, dass der Gasauslass einen von dem Einlaufbereich getrennten Abluftkanal umfasst, der mit einem Ende aus dem Stutzenabschluss herausgeführt und mit dem gegenüberliegenden Ende strömungstechnisch mit dem Einfüllrohr bzw. mit dem Innenraum des Flüssigkeitsbehälters verbunden ist und zur Bildung einer Labyrinthdichtung zumindest einen einfach oder mehrfach gekrümmten Teilabschnitt aufweist.

Sofern der Stutzenabschluss über eine Rückstromsperre verfügt, muss diese zum Betanken geöffnet und anschließend wieder verschlossen werden. Es ist eine weitere Aufgabe der Erfindung, einen Stutzenabschluss zu schaffen, der auf einfache Weise eine Öffnungsfunktion der Rückstromsperre ermöglicht.

Diese weitere Aufgabe wird dadurch gelöst, dass der Gasauslass über einen Gasverschluss verschließbar ist, der durch die Öffnungsbewegung des inneren Verschlussmittels in den geöffneten Zustand angetrieben ist, wobei eine Öffnung des inneren Verschlussmittels eine Öffnung des Gasverschlusses und ein Schließen des inneren Verschlussmittels ein Schließen des Gasverschlusses bewirkt.

Durch die erfindungsgemäße Ausgestaltung des Stutzenabschlusses mit einer Labyrinthdichtung kann nun ein Strömungsimpuls einer Flüssigkeitsfront oder eine Schaumfront ausgeschäumten Kraftstoffes wirksam zurückgehalten werden. Der Abluftkanal ist hierzu ein- oder mehrfach gekrümmt, wobei zumindest eine dieser Krümmungen bevorzugt einen Krümmungsradius von wenigstens 80°, insbesondere von 90° aufweist.

Eine bevorzugte Ausgestaltung der Erfindung weist einen unteren Sammler mit wenigstens einem Gassammelraum auf, in dem sich rückströmendes Gas und Schaum beruhigen kann, so dass Flüssigkeitskomponenten von Gaskomponenten abgeschieden werden. Hierdurch können flüssige Bestandteile in den Stutzen zurückfließen während flüchtige Bestandteile durch den Abluftkanal nach außen entweichen können.

Die Labyrinthdichtung kann zumindest einen Teilabschnitt mit doppelter Richtungsumkehr aufweisen, sie kann aber auch nur als Strömungsumlenkung mit zwei gegensinnigen Krümmungen von weniger als 90° ausgestaltet sein. Der gekrümmte Teilabschnitt kann bevorzugt der Übergangsbereich zwischen dem Gassammeiraum und dem Abluftkanal, also der Eintrittsbereich in den Abluftkanal sein. Zusätzlich kann jedoch auch noch ein weiteres Labyrinth in Form weiterer Krümmungen angeordnet sein oder es können weitere strömungstechnische Elemente, wie etwa eine Düsenkontur im Abluftkanal vorgesehen werden.

Der Einlauftrichter und der Stutzenrand begrenzen bei einem üblichen Behälter, wie etwa einem Kraftstoffbehälter, einen umlaufenden Hohlraum, in dem der Gassammelraum angeordnet werden kann. Dies kann zum Beispiel dann ein gebogener Körper mit kreissegmentförmigem Querschnitt sein. Die Einströmöffnungen können an der Oberseite des Gassammelraums angeordnet sein, sofern der Gassammeiraum in einem umlaufenden Hohlraum angeordnet ist, können sie aber auch zumindest teilweise in der Stirnseite angeordnet werden.

Zur weiteren Bildung einer Strömungsumlenkung kann der Gassammelraum eine zur Längsachse des Einfüllstutzens rechtwinklige, den Gassammelraum in zwei Kammern unterteilende Zwischenwand aufweisen. Hier ist die Einströmöffnung etwa auf jeder Seite mit der unteren Kammer verbunden und der Abluftkanal mündet von der Umgebung kommend in die obere Kammer. Beide Kammern können dann durch eine mittige Überströmöffnung miteinander verbunden sein, wobei der Abluftkanal natürlich im Abstand zu dieser Überströmöffnung angeordnet sein muss um eine möglichst große Strömungslänge zu bewirken.

Der Gassammelraum kann ein größeres Volumen als der Abluftkanal aufweisen, so dass sich eine Funktion eines Zwischenspeichers mit Strömungsberuhigung ergibt. Ebenso gut kann er jedoch auch ein gleichgroßes Volumen aufweisen und zum Beispiel von einem Kanalabschnitt gebildet sein, so dass die Angabe "Raum" nicht mit einem bestimmten Ausmaß verbunden sein soll.

Die Öffnungsbewegung des inneren Verschlussmittels erfolgt bevorzugt durch das Einsetzen der Eingießtülle, wenn also beispielsweise eine als Eingießtülle eingesetzte Zapfpistole einer Tankstelle in den Stutzen eingeführt wird. Dies kann selbsttätig oder auch über ein Stellmittel erfolgen, das von der Zapfpistole ausgelöst wird.

Um weitere Bauteile zu vermeiden, wird das innere Verschlussmittel bevorzugt von einer schwenkbaren, einer drehbaren oder auch einer schwenk- und drehbaren Verschlussklappe gebildet, die gegen die Zuhaltekraft einer Feder in Verschlussstellung gehalten ist. Als Feder wird bevorzugt eine Torsionsfeder oder auch eine Zug/Druckfeder eingesetzt.

Durch das Einsetzen der Eingießtülle in den Stutzen kann nun der untere Rand der Eingießtülle gegen die Verschlussklappe drücken und diese öffnen. Der Gasverschluss kann bei dieser Ausgestaltung von zumindest einer, durch die Bewegung der Verschlussklappe angetriebenen Flügelklappe gebildet sein, wobei diese Flügelklappe insbesondere fest mit der Verschlussklappe verbunden sein und beispielsweise parallel zur Klappenfläche angeordnet sein kann oder rechtwinklig von der Klappenfläche hervorspringen kann. Beim Schließen der Verschlussklappe legt sich nun die Flügelklappe auf den Gasauslass und verschließt diesen.

Die Flügelklappe kann alternativ auch über ein Hebelgetriebe oder möglicherweise gar über einen elektromotorischen Antrieb mit der Verschlussklappe verbunden sein. Ferner wird bevorzugt die Flügelklappe fest mit dem Verschlussmittel verbunden oder wird von einem gemeinsamen Bauteil gebildet.

Bei der oben genannten Ausführungsform kann das Schwenklager mit einem unteren Rand des Einlauftrichters verbunden sein und der Gassammelraum hinter dem Schwenklager angeordnet werden. Der Gassammelraum weist dann beispielsweise zu beiden Seiten des Schwenklagers zwei zur Längsachse des Einfüllstutzens rechtwinklige Stirnseiten auf und zumindest an diesen Stirnseiten ist jeweils wenigstens eine der Einströmöffnungen angeordnet. Die rechtwinklig von dem Verschlussmittel hervorstehenden Flügelklappen tauchen dann beim Verschließen des Verschlussmittels in den kreisförmigen Kanal zwischen Einlauftrichter und Stutzenrand ein und verschließen so die Einlauföffnungen des in dem Kanal angeordneten Gassammelraums.

Weitere Merkmale und Vorteile der Erfindung ergeben sich aus den Unteransprüchen und aus der nachfolgenden Beschreibung eines bevorzugten Ausführungsbeispiels anhand der Zeichnungen.

In den Zeichnungen zeigt
- Figur 1: eine dreidimensionale, nicht maßstäbliche Seitenansicht eines erfindungsgemäßen Stutzenabschlusses,
- Figur 2: eine dreidimensionale Seitenansicht einer weiteren Ausgestaltung eines erfindungsgemäßen Stutzenabschlusses,
- Figur 3: eine Schnittansicht auf den mittleren Einsatz des in Figur 2 dargestellten Stutzenabschlusses,
- Figur 4: eine Draufsicht auf den in Figur 3 dargestellten mittleren Einsatz,
- Figur 5: eine Draufsicht auf eine Abdeckkappe, die als obere Wandbegrenzung des Gassammelraumes auf den in Figur 3 dargestellten, mittleren Einsatz aufgesteckt wird,
- Figur 6: eine Ansicht der zusammengesteckten Teile aus den Figuren 3 und 4 und
- Figur 7: eine Draufsicht auf einen vollständig montierten Stutzeneinsatz in der in Figur 3 dargestellten Ausgestaltung.

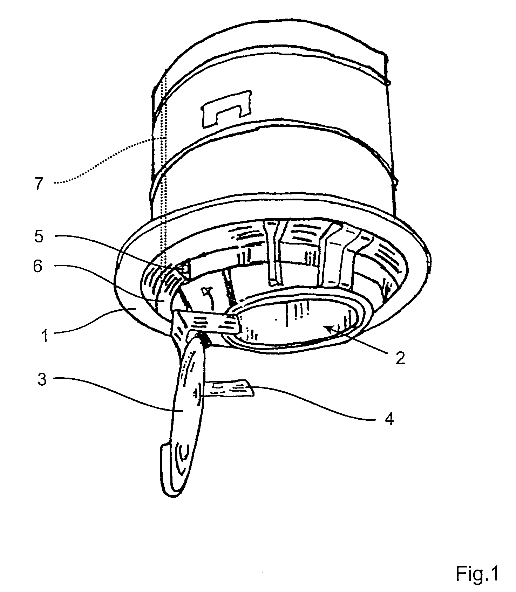

In Figur 1 ist ein Stutzenabschluss dargestellt, der in einem Stutzenrand 1 in Form eines oben umgebördelten Zylinderrohres eingesetzt ist und einen Einlauftrichter 2 zur Aufnahme des Benzins aufweist. Der Einlauftrichter 2 nimmt die Einlauftülle zum Beispiel einer Zapfpistole auf und weist einen Verschlussmittel 3 auf, der im Betriebszustand den Einlauftrichter 2 verschließt.

Ein bevorzugter Einsatzzweck des erfindungsgemäßen Stutzenabschlusses ist der Tank eines Kraftfahrzeugs. Hier wird inzwischen in vielen Staaten gesetzlich gefordert, dass während des Betankens austretende Gase, insbesondere Benzoldämpfe, aufgefangen und entsorgt werden. Hierzu wird der Abluftkanal in den Einlaufbereich geführt, damit die um die Zapfpistole angeordnete Unterdruckleitung die Verdrängungsgase ansaugen kann.

Beim Betanken wird Gas im Behälter verdrängt, das über einen Abluftkanal 7 abgeführt wird. Das Gas tritt zunächst in einen Gassammelraum 6 durch eine Einströmöffnung 5 ein und wird dann über eine rechtwinklige Umlenkung durch einen Abluftkanal 7 ins Freie geleitet.

Die Einströmöffnung 5 ist an der Stirnseite des Gassammelraumes 6 angeordnet. Durch Schwenken des Verschlussmittels 3 wird eine Flügelklappe eines Gasverschlusss 4 ebenfalls bewegt, die rechtwinklig zur Hauptebene des Verschlussmittels 3 angeordnet ist und mit diesem fest verbunden ist. Beide Bauteile können beispielsweise aus einem entsprechend gebogenen Blech einfach und effektiv gefertigt werden. Der Verschlussmittel 3 ist über eine hier nicht dargestellte Torsionsfeder in Anlage an den Einlauftrichter 2 gehalten, so dass erst eine mechanische Kraft durch das Einschieben der Einlauftülle einer Zapfpistole die Verschlussklappe 3 und damit die Flügelklappe des Gasverschlusss 4 für die Einlauföffnung öffnet.

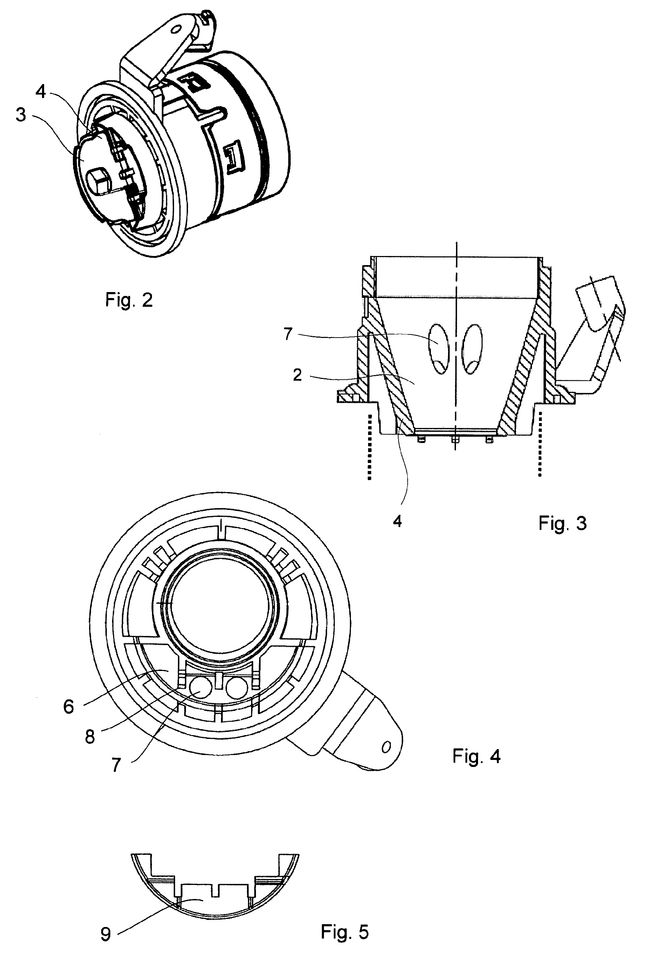

Die Figuren 2 bis 7 zeigen eine weitere Ausgestaltung des erfindungsgemäßen Stutzenabschlusses. Figur 2 zeigt dabei den mittleren Einsatz, der bevorzugt aus einem kraftstoffresistenten Kunststoff gefertigt ist. Der Abluftkanal 7 mündet oberhalb des Verschlussmittels in den Einlaufbereich 2. Unterhalb dieser Mündung ist, wie am besten in Figur 2 zu erkennen ist, als Verschlussmittel 4 eine federbelastete Klappe vorgesehen, die durch die Eingießtülle beim Einschieben der Tülle aufgestoßen wird. Gase, die durch einlaufende Flüssigkeit aus dem Behälter verdrängt werden, strömen hier durch den Abluftkanal 7 in den oberen Teil des Einlaufbereiches 2. Entlang der Eingießtülle können sie dann nach außen gelangen.

Der Querschnitt der Abluftkanäle 7 der Labyrinthdichtung muss größer sein als der Ringspalt zwischen beispielsweise der Zapfpistole und dem Einfüllzahnkopf, so dass die Hauptströmung und damit die Flüssigkeitsabscheidung im Labyrinth erfolgt.

Beim Befüllen des Kraftstofftankes entsteht im Einfüllrohr bzw. -bereich, insbesondere im Zeitpunkt des Abschaltens unterhalb des Einfüllstutzens ein Druckraum, dessen Überdruck nur durch den Gasauslass oder den Ringspalt entweichen kann. Infolge des Druckausgleichs gelangt Flüssigkraftstoff vor allem aufgrund der unterschiedlichen Querschnittsverhältnisse zwischen Ringspalt und Gasauslass in den Gasauslass.

Da erfindungsgemäß der Gasauslass keine geradlinige Gestalt aufweist, sondern labyrinthförmig ausgebildet ist, wird der von dem Druckausgleich mitgerissene Flüssigkraftstoff an den Gasauslasswänden abgeschieden und kann zurück in den Kraftstoffbehälter fließen. Auf diese Weise wird das Herausspritzen von Kraftstoff aus dem Gasauslass verhindert.

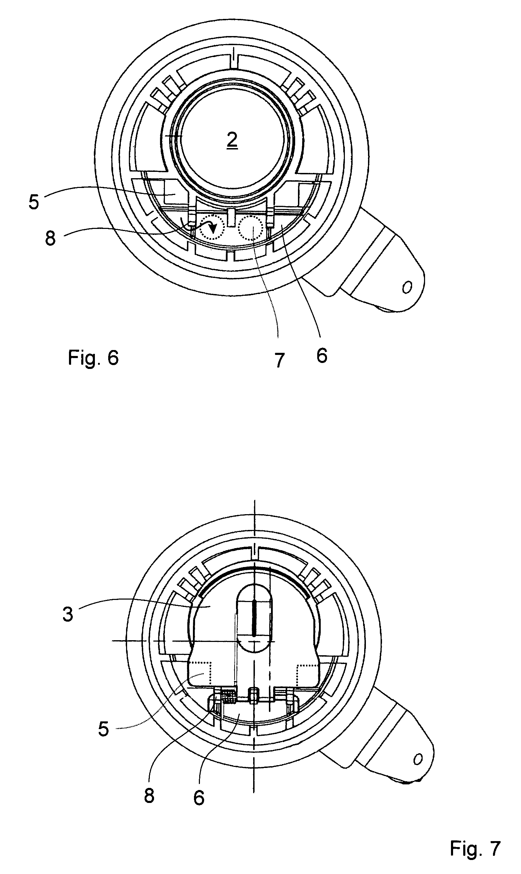

In Figur 3 ist das mittleren Bauteil des in Figur 2 dargestellten Stutzenabschlusses im Schnitt dargestellt. Die Abluftkanäle 7 münden in den konischen Einlaufbereich oberhalb der Verschlussmittel, die hier nicht dargestellt sind. Wie aus Figur 4 ersichtlich ist, münden die Abluftkanäle 7 mit den gegenüberliegenden Enden in einen Gassammelraum 6, der neben dem Einlaufbereich 2 angeordnet ist. Das Gas strömt zunächst in den Gassammelraum und dann parallel zur Stutzenachse aus den Abluftkanälen 7 in den Einlaufbereich 2.

Der Gassammelraum 6 wird erst durch Aufstecken des in Figur 5 dargestellten Deckelelementes 9 gebildet. Dieses Deckelelement 9 ist so an die Form des mittleren Elementes angepasst, dass zwischen den in Figur 4 dargestellten Seitenwangen 8 und dem Deckelelement 9 ein zur Stutzenachse paralleler Spalt verbleibt. Die Einströmöffnungen 5 des Gassammlers werden von seitlichen Bereichen gebildet, die von dem Deckelelement 9 nicht verschlossen werden.

Das Gas muss nun, nachdem sich ein Überdruck im Behälter und damit Gassammeiraum 6 ausgebildet hat, durch die Einströmöffnungen 5 in den Gassammler eintreten, dort um die Seitenwangen 8 herumströmen und dann in die Abluftkanäle 7 eintreten. Hierbei wird es einerseits in einer Ebene rechtwinklig zur Stutzenachse und andererseits in einer zur Stutzenachse parallelen Ebene umgelenkt. Eventuell mitströmende flüssige Bestandteile werden dabei von dem Gas getrennt und fließen in Richtung des Verschlussmittels zurück.

Figur 7 zeigt den Stutzenabschluss aus den Figuren 2 bis 6 vollständig montiert. Das Verschlussmittel 3 wird von einer federbelasteten Klappe gebildet, die den Stutzenrand und gleichzeitig die daneben liegenden Einströmöffnungen 5, hier gestrichelt eingezeichnet, abdeckt.

Als Feder wird bevorzugt eine Torsionsfeder eingesetzt, die durch die Schwenkbewegung der Klappe gespannt wird. Feder und Klappe sind hier an den Seitenwangen befestigt, so dass diese Befestigung gleichzeitig eine Befestigung des zwischen die Seitenwangen 8 eingesteckten Deckelelementes bewirkt.

### Bezugszeichenliste:

- 1: Stutzenrand
- 2: Einlauftrichter
- 3: Verschlussmittel
- 4: Gasverschluss
- 5: Einströmöffnung
- 6: Gassammelraum
- 7: Abluftkanal
- 8: Seitenwange
- 9: Deckelelement

## Patentansprüche

1. Stutzenabschluss für den Einfüllstutzen eines Flüssigkeitsbehälters, insbesondere eines Kraftstoffbehälters eines Fahrzeugs, mit
• einem oberen Stutzenrand (1),
• einem in den oberen Stutzenrand (1) eingesetzten, eine Eingießtülle insbesondere einer Zapfpistole aufnehmenden Einlaufbereich (2) und
• einem Gasauslass für während des Befüllens verdrängte Gasmengen,
**dadurch gekennzeichnet, dass**
der Gasauslass einen von dem Einlaufbereich (2) getrennten Abluftkanal (7) umfasst, der mit einem Ende aus dem Stutzenabschluss herausgeführt und mit dem gegenüberliegenden Ende strömungstechnisch mit dem Innenraum des Flüssigkeitsbehälters verbunden ist und zur Bildung einer Labyrinthdichtung zumindest einen einfach oder mehrfach gekrümmten Teilabschnitt aufweist.

2. Stutzenabschluss nach Anspruch 1, **dadurch gekennzeichnet, dass** der gekrümmte Teilabschnitt eine Krümmung des Abluftkanals (7) von zumindest 80°, insbesondere eine Krümmung von 90° bewirkt.

3. Stutzenabschluss nach Anspruch 1 oder 2, **dadurch gekennzeichnet, dass** der Gasauslass zumindest einen unteren Sammler mit wenigstens einem Gassammelraum (6) umfasst, in den über zumindest eine Einströmöffnung (5) verdrängtes Gas einzuströmen vermag, wobei der Abluftkanal (7) in den Sammler, insbesondere in den Gassammelraum (6) mündet und der Sammler strömungstechnisch mit dem Flüssigkeitsbehälter verbunden ist.

4. Stutzenabschluss nach dem vorhergehenden Anspruch, **dadurch gekennzeichnet, dass** der Abluftkanal (7) zumindest einen Bereich mit doppelter Richtungsumkehr aufweist.

5. Stutzenabschluss nach einem der beiden vorhergehenden Ansprüche, **dadurch gekennzeichnet, dass** der Einlaufbereich (2) von einem Einlauftrichter gebildet ist und der Stutzenrand (1) sowie die seitliche Wandung des Einlauftrichters einen Hohlraum begrenzen, in dem der Gassammelraum (6) angeordnet ist.

6. Stutzenabschluss nach dem vorhergehenden Anspruch, **dadurch gekennzeichnet, dass** der gekrümmte Teilabschnitt der Übergangsbereich zwischen dem Gassammelraum (6) und dem Abluftkanal (7) ist.

7. Stutzenabschluss nach einem der beiden vorhergehenden Ansprüche, **dadurch gekennzeichnet, dass** der gekrümmte Teilabschnitt von einem Eintrittskanal zwischen dem Gassammelraum (6) und dem Flüssigkeitsbehälter gebildet ist.

8. Stutzenabschluss nach einem der beiden vorhergehenden Ansprüche, **dadurch gekennzeichnet, dass** der Eintrittskanal zumindest einen Bereich mit doppelter Richtungsumkehr aufweist.

9. Stutzenabschluss nach einem der beiden vorhergehenden Ansprüche, **dadurch gekennzeichnet, dass** der Gassammelraum (6) einen kreissegmentförmigen Querschnitt aufweist, wobei das als Verschlussklappe ausgebildete Verschlussmittel (3) über ein Schwenklager mit einem unteren Rand des Einlauftrichters verbunden und der Gassammelraum (6) hinter dem Schwenklager angeordnet ist.

10. Stutzenabschluss nach dem vorhergehenden Anspruch, **dadurch gekennzeichnet, dass** der Gassammelraum (6) zwei zur Querschnittsebene des Einfüllstutzens rechtwinklige Stirnseiten aufweist und zumindest an diesen Stirnseiten jeweils wenigstens eine Einströmöffnung (5) angeordnet ist.

11. Stutzenabschluss nach dem vorhergehenden Anspruch, **dadurch gekennzeichnet, dass** der Gassammelraum (6) eine zur Längsachse des Einfüllstutzens rechtwinklige den Gassammelraum (6) in zwei Kammern unterteilende Zwischenwand aufweist, wobei die Einströmöffnung (5) in eine untere Kammer mündet, der Abluftkanal (7) über zumindest eine seitliche Austrittsöffnung mit der oberen Kammer verbunden ist und beide Kammern durch eine mittig angeordnete Überströmöffnung miteinander verbunden sind.

12. Stutzenabschluss, insbesondere nach einem der vorhergehenden Ansprüche, für den Einfüllstutzen eines Flüssigkeitsbehälters, insbesondere für den Einfüllstutzen eines Kraftstoffbehälters eines Kraftfahrzeugs, mit
• einem oberen Stutzenrand (1),
• einem in den oberen Stutzenrand (1) eingesetzten, eine Eingießtülle insbesondere einer Zapfpistole aufnehmenden Einlaufbereich (2),
• einem, eine Rückstromsperre zum Zurückhalten flüssiger Medien aufweisenden Gasauslass für während des Befüllens verdrängte Gasmengen und mit
• einem inneren Verschlussmittel (3), das im geschlossenen Zustand den Stutzenabschluss zu verschließen vermag und zum Befüllen des Flüssigkeitsbehälters durch eine Öffnungsbewegung in einen geöffneten Zustand versetzt ist, **dadurch gekennzeichnet, dass**
der Gasauslass über einen Gasverschluss (4) verschließbar ist, der durch die Öffnungsbewegung des inneren Verschlussmittels (3) in den geöffneten Zustand angetrieben ist, wobei eine Öffnung des inneren Verschlussmittels (3) eine Öffnung des Gasverschlusses und ein Schließen des inneren Verschlussmittels (3) ein Schließen des Gasverschlusses bewirkt.

13. Stutzenabschluss nach Anspruch 12, **dadurch gekennzeichnet, dass** die Öffnungsbewegung des inneren Verschlussmittels (3) durch das Einsetzen der Eingießtülle bewirkt ist.

14. Stutzenabschluss nach Anspruch 13, **dadurch gekennzeichnet, dass** das innere Verschlussmittel (3) von einer schwenk- und/oder drehbaren Verschlussklappe gebildet ist, die gegen die Zuhaltekraft einer Feder in Verschlussstellung gehalten ist und durch das Einsetzen der Eingießtülle in den geöffneten Zustand versetzt ist.

15. Stutzenabschluss nach dem vorhergehenden Anspruch, **dadurch gekennzeichnet, dass** der Gasverschluss (4) von zumindest einer, von der Schwenkund/oder Drehbewegung der Verschlussklappe angetriebenen Flügelklappe gebildet ist.

16. Stutzenabschluss nach Anspruch 14, **dadurch gekennzeichnet, dass** der Gasauslass von zumindest einem Auslass gebildet ist, der in einer Ebene mit dem von der Verschlussklappe abzudichtenden Stutzenrand und neben dem Stutzenrand angeordnet ist, wobei der Gasverschluss (4) von sich über den Stutzenrand hinaus erstreckenden Teilbereich der Verschlussklappe gebildet ist.

17. Stutzenabschluss nach dem vorhergehenden Anspruch, **dadurch gekennzeichnet, dass** die Flügelklappe fest mit der Verschlussklappe (3) verbunden ist.
